(19) Europäisches Patentamt
European Patent Office
Office européen des brevets

(11) Numéro de publication : **0 648 416 A1**

(12) # DEMANDE DE BREVET EUROPEEN

(21) Numéro de dépôt : **94420271.2**

(51) Int. Cl.$^6$ : **A01N 37/38**

(22) Date de dépôt : **11.10.94**

(30) Priorité : **14.10.93 FR 9312465**

(43) Date de publication de la demande : **19.04.95 Bulletin 95/16**

(84) Etats contractants désignés : **AT BE CH DE DK ES FR GB GR IE IT LI LU NL PT SE**

(71) Demandeur : **RHONE-POULENC AGROCHIMIE**
**14-20, rue Pierre Baizet**
**F-69009 Lyon (FR)**

(72) Inventeur : **Latorse, Marie-Pascale**
**Lieu Dit "Le Jannot"**
**F-69210 Sourcieux les Mines (FR)**

(74) Mandataire : **Chrétien, François et al**
**RHONE-POULENC AGROCHIMIE- DPI**
**B.P. 9163**
**F-69263 Lyon Cédex 09 (FR)**

(54) **Associations fongicides à base d'un phénylbenzamide.**

(57) 1. Association fongicide.
2. Elle comprend :
a) un composé de formule (A) :

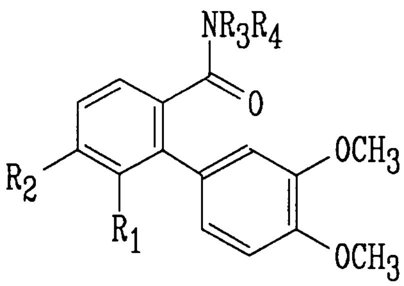

dans laquelle :
— $R_1$ et $R_2$, identiques ou différents, sont H, hal, alkyle éventuellement halogéné, et
— $R_3$ et $R_4$, identiques ou différents, sont alkyle(C1-C4) et
b) au moins un composé B choisi dans le groupe comprenant le manèbe, le mancozèbe, le folpet, un dérivé du cuivre, le phoséthyl-Al ou l'acide phosphoreux ou l'un de ses sels alcalins ou alcalinoterreux, le chlorothalonil, le fluazinam, une acylalanine, un acétamide et un méthoxyacrylate ou méthoxyiminoacétate.
3. Fongicides agricoles.

EP 0 648 416 A1

La présente invention a pour objet une association fongicide base d'un dérivé de type phénylbenzamide, sa préparation et son utilisation pour la protection des plantes contre les maladies fongiques. La demande européenne n° 0 360 701 décrit un très grand nombre de dérivés amides et notamment des phényl benzamides ainsi que leur utilisation comme matière active pour la lutte contre les maladies fongiques. Les exemples montrent en particulier leur activité préventive contre des maladies telles que les mildious.

La demanderesse a maintenant découvert qu'une association d'une sélection étroite de ces dérivés avec d'autres fongicides particuliers présente de remarquables et surprenantes propriétés synergiques, qui ouvrent des possibilités nouvelles d'applications.

Plus précisément l'invention concerne une association fongicide comprenant:

a) un composé de formule (A):

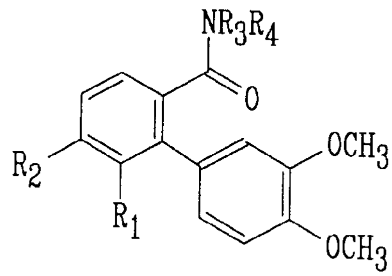

dans laquelle:

- $R_1$ et $R_2$, identiques ou différents, sont un atome d'hydrogène ou d'halogène ou un radical alkyle éventuellement halogéné, et de 1 à 4 atomes de carbone;
- $R_3$ et $R_4$, identiques ou différents, sont un alkyle de 1 à 4 atomes de carbone ;

et b) au moins un composé B choisi dans le groupe comprenant le manèbe (éthylène bis dithio carbamate de manganèse), le mancozèbe (éthylène bis dithio carbamate de zinc et de manganèse), le folpet (trichlorométhylthioisoindolinedione), un dérivé du cuivre, le phoséthyl-Al (tris-O-éthylphosphonate d'aluminium) ou l'acide phosphoreux ou l'un de ses sels alcalins ou alcalinoterreux, le chlorothalonil (tétrachloro-isophthalonitrile), le fluazinam (N-(3-chloro-5-trifluorométhyl-2-pyridyl)-2,6-dinitro-3-chloro-4-trifluorométhylaniline), une acylalanine,un un acétamide ou un méthoxyacrylate ou un méthoxyiminoacétate.

De manière préférée, on choisit des dérivés de formule A, dans laquelle $R_1$ et $R_2$ sont un atome d'hydrogène ou un radical trifluorométhyle et $R_3$ et $R_4$ sont un méthyle ou un éthyle.

De manière particulièrement préférée, le composé A est le N,N-diéthyl-2-(3,4-diméthoxyphényl)-4-trifluorométhylbenzamide ou le N méthyl, N éthyl-2-(3,4-diméthoxy phényl)-4-trifluorométhylbenzamide.

De manière préférée, on entend par acylalanine un composé tel que le métalaxyl (N-(2,6-diméthylphényl)-N-(méthoxyacétyl) alaninate de méthyle), le bénalaxyl (N-(2,6-diméthylphényl)-N-phénylacétyl) alaninate de méthyle) ou le furalaxyl, l'oxadixyl (N-(2,6-diméthyl-phényl)-2-méthoxy-N-(2-oxo-3-oxazolidinyl)acétamide)et l'acylamide ofurace(2-chloro-(N-(2,6-diméthylphényl)-N-(tétrahydro-2-oxo-3-furanyl) acétamide).

De manière préférée, on entend par acétamide un composé tel que le cymoxanyl (2-cyano-N-[(éthylamino)carbonyl]-2-(méthoxyimino) acétamide).

De manière préférée, on entend par dérivé du cuivre un dérivé tel que le sulfate de cuivre neutralisé à la chaux ou bouillie bordelaise, l'oxyde cuivreux ou l'oxychlorure de cuivre;

De manière préférée, on entend par dérivé méthoxyiminoacétate notamment le méthyl-(E)-methoximinol[∝(tolyloxy)-o-tolyl]acétate.

Selon l'invention les constituants de l'association sont en quantité telle que leur rapport pondéral A/B est compris entre 0,001 et 100/1.

De manière parfaitement inattendue, l'association améliore de façon notable l'action des matières actives prises séparément pour un certain nombre de champignons particulièrement nuisibles aux cultures comme en particulier la vigne, les solanées et les cultures légumières. Cette amélioration se traduit par une extension du spectre des maladies pouvant être combattues, une augmentation de la persistance de la protection par rapport aux matières actives connues, et une diminution des doses de chacun des constituants, ce qui est particulièrement avantageux pour l'utilisateur et l'environnement.

Par "association" des composés A et B on entend toute combinaison des deux composés, qui peuvent être appliquées simultanément en mélange prêt à l'emploi ou en mélange ex temporané, ou successivement mais de manière suffisamment rapprochée pour que les actions puissent se combiner.

L'association présente des propriétés synergiques attestées par l'application de la méthode de Tammes, "Isoboles, a graphic représentation of synergism in pesticides" Netherlands Journal of Plant Pathology,

70(1964), p. 73-80 ou comme défini par Limpel, L.E., P.H. Schuldt et D.Lammont, 1962, Proc. NEWCC 16:48-53, en utilisant la formule:

$$E = X + Y - \frac{XY}{100}$$

dans laquelle:

E est le pourcentage attendu d'inhibition de la croissance du champignon par un mélange des deux fongicides A et B à des doses définies;

X est le pourcentage attendu d'inhibition observé par le fongicide A à une dose définie,

Y est le pourcentage attendu d'inhibition observé par le fongicide B à une dose définie.

Quand le pourcentage d'inhibition observé de l'association est supérieur à E, il y a synergie.

Selon l'invention les constituants de l'association sont en quantité telle que leur rapport pondéral A/B est compris entre 0,001 et 100/1 et de préférence rntre 0,001 et 5/1.

De manière préférée, lorsque B est le manèbe ou le mancozèbe, le rapport est compris entre 0,05 et 5/1, de préférence entre 0,1 et 4/1.

De manière préférée, lorsque B est le folpet, le rapport est compris entre 0,05 et 5/1 de préférence entre 0,1 et 4/1.

De manière préférée, lorsque B est un dérivé du cuivre, le rapport est compris entre 0,01 et 1 de préférence entre 0,1 et 4/1.

De manière préférée, lorsque B est le phoséthyl-Al ou l'acide phosphoreux ou l'un de ses sels, le rapport est compris entre 0,001 et 2/1 de préférence entre 0,1 et 4/1.

De manière préférée, lorsque B est le chlorothalonil, le rapport est compris entre 0,01 et 1, de préférence entre 0,02 et 0,4.

De manière préférée, lorsque B est un acylalanine, le rapport est compris entre 0,05 et 5/1, de préférence entre 0,1 et 4/1.

De manière préférée, lorsque B est le fluazinam, le rapport est compris entre 0,05 et 5/1, de préférence entre 0,1 et 4/1.

De manière préférée, lorsque B est un acétamide, le rapport est compris entre 0,05 et 5/1, de préférence entre 0,1 et 4/1.

De manière préférée, lorsque B est un méthoxyacrylate, le rapport est compris entre 0,01 et 5/1, de préférence entre 0,1 et 4/1.

Les exemples suivants illustrent les remarquables propriétés des associations selon l'invention.

Exemple 1: Test in vivo en préventif sur *Plasmopara viticola*:

Des boutures de vigne (Vitis vinifera), variété Chardonnay, sont cultivées dans des godets. Lorsque ces plants sont âgés de 2 mois (stade 8 à 10 feuilles, hauteur de 10 à 15 cm ), ils sont traités par pulvérisation des produits A et B formulés (concentré émulsionnable, poudre mouillable) et par le mélange extemporané de ces produits à tester dans le cas d'une association A + B pour des rapports pondéraux A/B respectifs indiquées sur les figures décrites ci-après.

Le composé A est le N-méthyl-N-éthyl-2-(3,4-diméthoxyphényl)-4-trifluorométhylbenzamide et le composé B est respectivement soit le mancozèbe ou le manèbe, soit le folpet, soit le foséthyl-Al ou l'acide phosphoreux, soit un dérivé du cuivre(oxychlorure). Des plants utilisés comme témoins sont traités par une bouillie de traitement similaire mais ne contenant pas de matière active ("blanc de formulation )

On compare l'efficacité des traitements dans le cadre d'une application préventive 24h avant contamination des plantes ou d'une application curative 24h après contamination. La contamination est réalisée par pulvérisation d'une suspension aqueuse de spores de *Plasmopara viticola* obtenue à partir de feuilles sporulées contaminées 7 jours auparavant. Ces spores sont mises en suspension à raison de 100 000 unités par $cm^3$. Les plants contaminés sont ensuite mis en incubation pendant deux jours à 18°C environ, en atmosphère saturée d'humidité puis pendant 5 jours à 20-22°C sous 90-100% d'humidité relative.

La lecture se fait 7 jours après la contamination. Les résultats obtenus sont reportés sous forme de points dans un diagramme d' isoboles de Tammes, avec en abcisse les doses de A exprimées en mg/l et en ordonnée les doses de B également en mg/l. On obtient les isoboles:

-des figures 1 pour le mancozèbe et 2 pour le manèbe,

- de la figure 4 pour le folpet,
- de la figure 5 pour l'acide phosphoreux

qui montrent une synergie des associations correspondantes.

Par ailleurs on obtient des résultats au moins additifs avec des associations du composé A avec le fosétyl-Al ou dérivé du cuivre tel que l'oxychlorure.

On obtient des résultats très voisins avec le N,N-diéthyl-2-(3,4-diméthoxyphényl)-4-trifluorométhyl- benzamide.

Exemple 2: Test in vivo en préventif sur *Phytophthora infestans* (mildiou de la tomate)

Des plants de tomate (variété Marmande) sont cultivés dans des godets. Lorsque ces plants sont âgés d'un mois (stade 5 à 6 feuilles, hauteur 12 à 15 cm), ils sont traités par pulvérisation des produits A et B formulés (concentré émulsionnable, poudre mouillable) et par le mélange extemporané de ces produits à tester dans le cas d'une association A + B pour des rapports pondéraux A/B respectifs indiquées sur les figures décrites ci-après. Le composé A est le N-méthyl-N-éthyl-2-(3,4-diméthoxyphényl)-4-trifluorométhyl- benzamide et le composé B est respectivement soit le chlorothalonil, soit le fosétyl-Al, soit le métalaxyl, soit le bénalaxyl, soit le cymoxanyl, soit le méthyl-(E)-methoximino[∝-(tolyloxy)-o-tolyl]acétate.

On obtient des résultats très voisins avec le N,N-diéthyl-2-(3,4-diméthoxyphényl)-4-trifluorométhyl- benzamide.

On compare l'efficacité des traitements après application préventive 48 h, avant contamination des plantes par pulvérisation d'une suspension aqueuse de spores (30000 sp/ml) de *Phytophthora infestans*.

Après cette contamination, les plants de tomate sont mis en incubation pendant 7 jours à 20°C environ en atmosphère saturée d'humidité.

On obtient les isoboles de:.On obtient les isoboles:

- de la figure 3, avec le chlorothalonil
- de la figure 6, avec le fosétyl-Al,
- de la figure 7 avec le métalaxyl,
- de la figure 8, avec le bénalaxyl,
- de la figure 9, avec le cymoxanyl
- de la figure 10, avec le méthyl-(E)-methoximino[∝-(tolyloxy)-o-tolyl]acétate (BASF 490 F)

qui montrent une synergie des associations correspondantesPar ailleurs on obtient des résultats au moins additifs avec des associations du composé A avec comme composé B un dérivé du cuivre tel que l'oxychlorure.

On obtient des résultats très voisins avec le N,N-diéthyl-2-(3,4-diméthoxyphényl)-4-trifluorométhyl- benzamide.

Exemple 3 : Test in vivo en curatif sur *Plasmopara viticola*:

Des boutures de vigne (Vitis vinifera), variété Chardonnay, sont cultivées dans des godets. Lorsque ces plants sont âgés de 2 mois (stade 8 à 10 feuilles, hauteur de 10 à 15 cm ), ils sont traités par pulvérisation des produits A et B formulés (concentré émulsionnable, poudre mouillable) et par le mélange extemporané de ces produits à tester dans le cas d'une association A + B pour des rapports pondéraux A/B respectifs indiquées sur les figures décrites ci-après.

Le composé A est le N-méthyl-N-éthyl-2-(3,4-diméthoxyphényl)-4-trifluorométhylbenzamide et le composé B est respectivement soit l'oxadixyl, soit le cymoxanyl.

Des plants utilisés comme témoins sont traités par une bouillie de traitement similaire mais ne contenant pas de matière active ("blanc de formulation )

On compare l'efficacité des traitements dans le cadre d'une application curative 24h après contamination. La contamination est réalisée par pulvérisation d'une suspension aqueuse de spores de *Plasmopara viticola* obtenue à partir de feuilles sporulées contaminées 7 jours auparavant. Ces spores sont mises en suspension à raison de 100 000 unités par $cm^3$.

Les plants contaminés sont ensuite mis en incubation pendant deux jours à 18°C environ, en atmosphère saturée d'humidité puis pendant 5 jours à 20-22°C sous 90-100% d'humidité relative.

La lecture se fait 7 jours après la contamination. Les résultats obtenus sont reportés sous forme de points dans un diagramme d' isoboles de Tammes, avec en abcisse les doses de A exprimées en mg/l et en ordonnée les doses de B également en mg/l. On obtient les isoboles:

- de la figure 11, avec le oxadixyl,
- de la figure 12, avec le cymoxanyl

qui montrent une synergie des associations correspondantes.

Ces résultats illustrent clairement la remarquable synergie des associations selon l'invention.

Celles ci s'appliquent avantageusement à des doses de 0,01 à 5 kg/ha, et plus spécifiquement de 0,02 à 2 kg/ha environ.

Pour leur emploi pratique, les composés des associations selon l'invention sont rarement utilisés seuls.

Le plus souvent ils font partie de compositions. Ces compositions, utilisables pour la protection des végétaux contre les maladies fongiques, ou dans les compositions régulatrices de la croissance des plantes, contiennent comme matière active au moins un composé selon l'invention tel que décrit précédemment en association avec les supports solides ou liquides inertes, acceptables en agriculture et/ou les agents tensio-actifs compatibles avec la matière active,également acceptables en agriculture. En particulier sont utilisables les supports inertes et usuels et les agents tensio-actifs usuels.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz.

L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthyles. La présence d'au moins un agent tensioactif est généralement indispensable lorsque la matière active et/ou le support inerte ne sont pas solubles dans l'eau et que l'agent vecteur de l'application est l'eau.

Les compositions utilisées dans l'invention peuvent être sous des formes assez diverses, fluides, liquides, ou solides.

Comme formes de compositions fluides, ou liquides, on peut citer notamment les concentrés émulsionnables, les émulsions, les suspensions aqueuses concentrées, les pâtes, les solutions, en particulier les concentrés solubles dans l'eau, les solutions concentrées dans un milieu organique, (solution ULV) et les aérosols.

Les concentrés émulsionnables ou solubles comprennent le plus souvent 10 à 80 % de matière active, les émulsions ou solutions prêtes à l'application contenant, quant à elles, 0,001 à 20 % de matière active. En plus de la matière active et du solvant, les concentrés émulsionnables peuvent contenir, quand c'est nécessaire, un co-solvant approprié et de 2 à 20 % d'additifs appropriés, comme des stabilisants, des agents de pénétration, des inhibiteurs de corrosion, des colorants, des adhésifs.

A partir de ces concentrés, on peut obtenir par dilution avec de l'eau des émulsions de toute concentration désirée, qui conviennent particulièrement à l'application sur les cultures.

A titre d'exemples, voici la composition de quelques concentrés émulsionnables:

Exemple CE 1:

- matière active (association A/B) 250 g/l
- huile végétale epoxydée 25 g/l
- mélange de sulfonate d'alcoylaryle et d'éther de polyglycol et d'alcools gras. 100 g/l
- diméthylformamide 50 g/l
- xylène 575 g/l

Exemple CE 2:

- matière active (association A/B) 400 g/l
- dodécylbenzene sulfonate alcalin . 24 g/l
- nonylphénol oxyéthyle à 10 molécules d'oxyde éthylène 16 g/l
- cyclohexanone 200 g/l
- solvant aromatique. qsp 1 l

A partir de ces concentrés, on peut obtenir par dilution avec de l'eau des émulsions de toute concentration désirée, qui conviennent particulièrement à l'application sur les feuilles.

Les suspensions concentrées, également applicables en pulvérisation, sont préparées de manière à obtenir un produit fluide stable ne se déposant pas et elles contiennent habituellement de 10 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble : certaines matières solides organiques ou des sels minéraux peuvent être dissous dans le support pour aider à empêcher la sédimentation ou comme antigels pour l'eau.

A titre d'exemple, voici la composition de plusieurs suspensions aqueuses concentrées selon l'invention:

Exemple SAC 1:

On prépare une suspension aqueuse comprenant :

- matière active (association A/B) 100 g/l
- agent mouillant (alkylphénol polyéthoxylèné) 5 g/l
- agent dispersant (Naphtalène sulfonate de Na) 10 g/l
- antigel (Propylèneglycol) 100 g/l
- épaississant (Polysaccharide) 3 g/l
- biocide (Formaldéhyde) 1 g/l
- eau Q.S.P.1 litre

Exemple SAC 2:

On prépare une suspension aqueuse comprenant :

- matière active (association A/B) 250 g/l
- agent mouillant (alcool synthétique en C13 polyéthoxylé): 10 g/l
- agent dispersant (lignosulfonate de sodium) 15 g/l
- antigel (urée) 50 g/l
- épaississant (Polysaccharide) 2,5 g/l
- biocide (Formaldéhyde) 1 g/l
- eau Q.S.P.1 litre

Exemple SAC 3:

On prépare une suspension aqueuse comprenant :

- matière active (association A/B) 500 g/l
- agent mouillant (alcool synthétique en C13 polyéthoxylé): 10 g/l
- agent dispersant (phosphate de polyarylphénol éthoxylé salifié) 50 g/l
- antigel (propylèneglycol) 100 g/l
- épaissement (polysaccharide) 1,6 g/l
- biocide (méthylhydroxy-4 benzoate de sodium) 3,3 g/l
- eau Q.S.P.1 litre.

Comme formes de compositions solides, on peut citer les poudres pour poudrage (à teneur en matières actives pouvant aller jusqu'à 100 %) et les granulés, notamment ceux obtenus par extrusion, par compactage, par imprégnation d'un support granulé, par granulation à partir d'une poudre (la teneur en composé de formule (I) dans ces granulés étant entre 0,5 et 80 % pour ces derniers cas).

Les poudres mouillables (ou poudres à pulvériser) sont habituellement préparées de manière qu'elles contiennent 10 à 95 % de matière active, et elles contiennent habituellement, en plus du support solide, de 0 à 5 % d'un agent mouillant, de 3 à 10 % d'un agent dispersant, et, quand c'est nécessaire, de 0 à 1O % d'un ou plusieurs stabilisants et/ou autres additifs, comme des agents de pénétration, des adhésifs, ou des agents antimottants, colorants, etc...

A titre d'exemple, voici la composition pondérale de plusieurs poudres mouillables.

Exemple PM1 :

- matière active (association A/B) 10 %
- alcool synthétique oxo de type ramifié, en C13 éthoxyle par 8 à 10 oxyde d'éthylène (agent mouillant) 0,75 %
- lignosulfonate de calcium neutre (agent dispersant 12 %
- carbonate de calcium (charge inerte) qsp 100 %.

Exemple PM 2:

- matière active (association A/B) 50 %
- alcool gras éthoxylé (agent mouillant) 2,5 %
- styrylphenol ethoxyle (agent dispersant) 5 %
- craie (support inerte) 42,5 %

Exemple PM 3 : on utilise les mêmes ingrédients que dans l'exemple précédent, dans les proportions ci-après:

- matière active (association A/B) 75 %
- agent mouillant 1,5 %
- agent dispersant 8 %
- carbonat de calcium (charge inerte) qsp 100 %

Exemple PM4 :

- matière active (association A/B) 90 %
- alcool gras éthoxylé (agent mouillant) 4 %
- styrylphenol éthoxylé (agent dispersant) 6 %

Pour obtenir ces poudres à pulvériser ou poudres mouillables, on mélange intimement la matière active dans des mélangeurs appropriés avec les substances additionnelles et on broie avec des moulins ou autres

broyeurs appropriés. On obtient par là des poudres à pulvériser, dont la mouillabilité et la mise en suspension sont avantageuses; on peut les mettre en suspension avec de l'eau à toute concentration désirée et cette suspension est utilisable très avantageusement en particulier pour l'application sur les feuilles des végétaux.

Les composés de formule (I) peuvent encore être utilisés sous forme de poudres pour poudrage ; on peut aussi utiliser une composition comprenant 50 g de matière active et 950 g de talc ; on peut aussi utiliser une composition comprenant 20 g de matière active, 10 g de silice finement divisée et 970 g de talc; on mélange et broie ces constituants et on applique le mélange par poudrage.

Les granulés pour poudrage ont des dimensions comprises entre O,1 et 2 mm et peuvent être fabriqués par agglomération ou imprégnation. En général, les granulés contiennent 0,5 à 25 % de matière active et 0 à 10 % d'additifs comme des stabilisants, des agents de modification à libération lente, des liants et des solvants.

Voici deux exemples de composition de granulé:

Exemples G 1 et G 2:

| | | |
|---|---|---|
| - matière active (association A/B) | 50 g | 200 g |
| - propylène glycol | 50 g | 50 g |
| - éther de cétyle et de polyglycol | 2,5 g | 2,5 g |
| - polyéthylène glycol | 35 g | 35 g |
| - kaolin (granulométrie : 0,3 à 0,8 mm) | 910 g | 760 g. |

Les composés selon l'invention peuvent être avantageusement formulés sous la forme de granulés dispersibles dans l'eau également compris dans le cadre de l'invention.

Ces granulés dispersibles, de densité apparente généralement comprise entre environ 0,3 et 0,6 ont une dimension de particules généralement comprise entre environ 150 et 2000, et de préférence entre 300 et 1500, microns.

La teneur en matière active de ces granulés est généralement comprise entre environ 1 % et 90 % et de préférence entre 25 % et 90 %.

Le reste du granulé est essentiellement composé d'une charge solide et éventuellement d'adjuvants tensio-actifs conférant au granulé des propriétés de dispersibilité dans l'eau. Ces granulés peuvent être essentiellement de deux types distincts selon que la charge est hydrosoluble, elle peut être minérale et de préférence organique. On a obtenu d'excellents résultats avec l'urée. Dans le cas d'une charge insoluble, celle-ci est de préférence minérale, comme par exemple le kaolin ou la bentonite. Elle est alors accompagnée d'agents tensio-actifs (à raison de 2 à 20 % en poids du granule), adjuvants tensio-actifs dont plus de la moitié est constituée par au moins un agent dispersant, essentiellement anionique, tel qu'un poly(naphtalène sufonate alcalin ou alcalino terreux) ou un lignosulfonate alcalin ou alcalino-terreux, le reste étant constitué par des mouillants non ioniques ou anioniques tel qu'un alcoyl- naphtalène sulfonate alcalin ou alcalino-terreux.

Par ailleurs, bien que cela ne soit pas indispensable, on peut ajouter d'autres adjuvants tels que des agents anti-mousse.

Le granulé selon l'invention peut être préparé par mélange des ingrédients nécessaires puis granulation selon plusieurs techniques en soi connues (drageoir, lit fluide, atomiseur, extrusion, etc...). On termine généralement par un concassage suivi d'un tamisage à la dimension de particule choisie dans les limites mentionnées ci-dessus.

De préférence, il, est obtenu par extrusion. En opérant comme indiqué dans les exemples ci-après, on a préparé les compositions suivantes de granules dispersibles.

Exemple GD1 :

Dans un mélangeur, on mélange 90 % en poids de matière active (composé n° 5) et 10 % d'urée en perles. Le mélange est ensuite broyé dans un broyeur à broches. On obtient une poudre humide qui est extrudée dans une extrudeuse à rouleau perforé. On obtient un granule qui est séché, puis concassé et tamisé, de façon à ne garder respectivement que les granules d'une dimension comprise entre 150 et 2000 microns.

Exemple GD2 :

Dans un mélangeur, on mélange les constituants suivants :

- matière active (association A/B) 75 %
- agent mouillant (alkylnaphtalène sulfonate de sodium 2 %
- agent dispersant (polynaphtalène sulfonate de sodium 8 %

- charge inerte insoluble dans l'eau (kaolin) 15 %

Exemple GD3 :

- matière active (association A/B) 20 %
- alkylnaphtalène sulfonate de sodium 2 %
- méthylène bis naphtalène sulfonate de sodium 8 %
- kaolin 70 %

Ce mélange est granulé en lit fluide, en présence d'eau, puis séché, concassé et tamisé de manière à obtenir des granules de dimension comprise entre 0,16 et O,40 mm.

Ces granulés peuvent être utilisés seuls, en solution ou dispersion dans de l'eau de manière à obtenir la dose cherchée. Ils peuvent aussi être utilisés pour préparer des associations avec d'autres matières actives, notamment fongicides, ces dernières étant sous la forme de poudres mouillables, ou de granulés ou suspensions aqueuses.

Les composés selon l'invention peuvent être encore formulés sous forme de solutions organiques encapsulables, notamment par polymérisation interfaciale, dans des capsules à paroi polymériques, par exemple à base de polyamides de polyurées ou de polyamide urées. Ces capsules se trouvent à l'état de dispersion aqueuse concentrée que l'on peut diluer au moment de l'emploi pour obtenir une bouillie de pulvérisation.

Comme cela a déjà été dit, les dispersions et émulsions aqueuses, par exemple des compositions obtenues en diluant à l'aide d'eau une poudre mouillable ou un concentré émulsionnable selon l'invention, sont comprises dans le cadre général des compositions utilisables dans la présente invention. Les émulsions peuvent être du type eau-dans-l'huile ou huile-dans-l'eau et ils peuvent avoir une consistance épaisse comme celle d'une "mayonnaise".

L'invention concerne de plus un procédé de traitement, tant en curatif qu'en préventif, des végétaux contre les maladies causées par les champignons phytopathogènes notamment ceux de la famille des oomycètes du type Phytophthora sp par exemple Phytophthora infestans (mildiou de la pomme de terre ou de la tomate), Phytophthora Citrophthora, Phytophthora capsici, Phytophthora cactorum, Phytophthora palmivora, Phytophthora cinnamoni, Phytophthora megasperma, Phytophthora parasitica, Peronospora sp (notamment mildiou du tabac), Plasmopara sp notamment Plasmopara viticola (mildiou de la vigne) et Plasmopara halstedei (mildiou du tournesol), Pseudoperonospora sp (notamment mildiou des cucurbitacees et du houblon), Bremia lactucae (Bremia de la laitue), ainsi que les champignons du sol, ce procédé étant caractérisé en ce qu'on applique un dérivé selon l'invention. L'excellente activité curative des composés selon l'invention est particulièrement avantageuse puisqu'elle permet de diminuer le nombre des traitements préventifs systématiques tout en assurant un bon contrôle des parasites.

Ce procédé est caractérisé en ce qu'il consiste à appliquer sur ces végétaux une quantité efficace d'une composition contenant comme matière active un composé selon la formule (I). Par "quantité efficace" on entend une quantité suffisante pour permettre le contrôle et la destruction des champignons présents sur ces végétaux. les doses d'utilisation peuvent toutefois varier dans de larges limites selon le champignon à combattre, le type de culture, les conditions climatiques, et selon le composé utilisé.

En pratique des doses allant de 1 g/hl à 500 g/hl correspondant sensiblement à des doses de matière active par hectare de 10 g/ha à 5000 g/ha environ donnent généralement de bons résultats.

Comme exemples de procédés de traitement utilisables, on peut citer la pulvérisation foliaire ou au sol, le poudrage, le trempage, l'incorporation au sol de granulés, de poudres ou de bouillies, l'arrosage, l'injection dans les arbres, le badigeonnage et le traitement des semences.

## Revendications

**1.** Association fongicide comprenant:

a) un composé de formule (A):

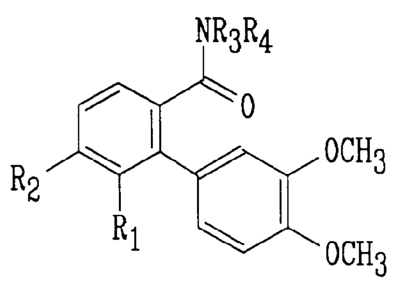

dans laquelle:

- $R_1$ et $R_2$, identiques ou différents, sont un atome d'hydrogène ou d'halogène ou un radical alkyle éventuellement halogéné, et
- $R_3$ et $R_4$, identiques ou différents, sont un alkyle de 1 à 4 atomes de carbone et

b) au moins un composé B choisi dans le groupe comprenant le manèbe (éthylène bis dithio carbamate de manganèse), le mancozèbe (éthylène bis dithio carmate de zinc et de manganèse), le folpet (trichlorométhylthioisoindolinedione), un dérivé du cuivre, le phoséthyl-Al (tris-O-éthylphosphonate d'aluminium) ou l'acide phosphoreux ou l'un de ses sels alcalins ou alcalinoterreux, le chlorothalonil (tétrachloro-isophthalonitrile), le fluazinam (N-(3-chloro-5-trifluorométhyl-2-pyridyl)-2,6-dinitro-3-chloro-4-trifluorométhyl-aniline), une acylalanine,un acétamide et un méthoxyacrylate ou un iminoacétate,

les constituants A et B de l'association étant en quantité telle que le rapport pondéral A/B est compris entre 0,001 et 100/1.

2. Association fongicide selon la revendication 1, caractérisée en ce que le rapport pondéral A/B est compris entre 0,001 et 5/1.

3. Association fongicide selon l'une des revendications 1 et 2, caractérisée en ce qu'elle contient comme composé B, le manèbe ou le mancozèbe, le rapport pondéral A/B étant compris entre 0,05 et 5/1, de préférence entre 0,1 et 4/1.

4. Association fongicide selon l'une des revendications 1 à 3, caractérisée en ce qu'elle contient comme, composé A, le N,N-diéthyl-2-(3,4-diméthoxyphényl)-4-trifluorométhyl-benzamide.

5. Association fongicide selon l'une des revendications 1 à 3, caractérisée en ce qu'elle contient, comme composé A, le N méthyl, N éthyl-2-(3,4-diméthoxy phényl)-4-trifluorométhyl-benzamide.

6. Association fongicide selon l'une des revendications 1 à 3, caractérisée en ce qu'elle contient comme composé B, le folpet, le rapport pondéral A/B étant compris entre 0,05 et 5/1, de préférence entre 0,1 et 4/1.

7. Association fongicide selon l'une des revendications 1 à 3, caractérisée en ce qu'elle contient comme composé B, un dérivé du cuivre, le rapport pondéral A/B étant compris entre entre 0,01 et 1, de préférence entre 0,1 et 4/1.

8. Association selon la revendication 7, caractérisée en ce que le dérivé de cuivre est de la bouillie bordelaise.

9. Association selon la revendication 7, caractérisée en ce que le dérivé de cuivre est de l'oxychlorure de cuivre.

10. Association fongicide selon l'une des revendications 1 à 3, caractérisée en ce qu'elle contient comme composé B, le phoséthyl-Al ou l'acide phosphoreux ou l'un de ses sels, le rapport pondéral A/B étant compris entre 0,001 et 2/1 de préférence entre 0,1 et 4/1.

11. Association fongicide selon l'une des revendications 1 à 3, caractérisée en ce qu'elle contient comme composé B, le chlorothalonil, le rapport pondéral A/B étant compris entre 0,01 et 1, de préférence entre 0,02 et 0,4.

12. Association fongicide selon l'une des revendications 1 à 3, caractérisée en ce qu'elle contient comme composé B, une acylalanine, le rapport pondéral A/B étant compris entre 0,05 et 5/1, de préférence entre 0,1 et 4/1.

13. Association selon la revendication 12, caractérisée en ce que l'acylalanine est le métalaxyl.

14. Association selon la revendication 12, caractérisée en ce que l'acylalanine est le benalaxyl.

15. Association selon la revendication 12, caractérisée en ce que l' acylalanine est l'ofurace;

16. Association selon la revendication 12, caractérisée en ce que l' acylalanine est l'oxadixyl.

**17.** Association selon la revendication 12, caractérisée en ce que l'acylalanine est le furalaxyl.

**18.** Association fongicide selon l'une des revendications 1 à 3, caractérisée en ce qu'elle contient comme composé B, un acétamide, dans un rapport pondéral A/B compris entre 0.001 et 4/1.

**19.** Association selon la revendication 18, caractérisée en ce que l'acétamide est le cymoxanyl.

**20.** Association fongicide selon l'une des revendications 1 à 3, caractérisée en ce qu'elle contient comme composé B, un méthoxyacrylate ou un méthoxyiminoacétate , dans un rapport pondéral A/B compris entre 0.001 et 5/1.

**21.** Composition fongicide pour la protection des plantes, caractérisée en ce qu'elle contient comme matière active une association selon l'une des revendications 1 à 18.

**22.** Procédé pour la protection des plantes contre les maladies fongiques, caractérisé en ce qu'on applique un composé de formule A et un composé B selon l'une des revendications 1 à 19.

**23.** Procédé selon la revendication 20, caractérisé en ce que les composés A et B sont appliqués simultanément.

**24.** Procédé selon la revendication 20, caractérisé en ce que les composés A et B sont appliqués successivement.

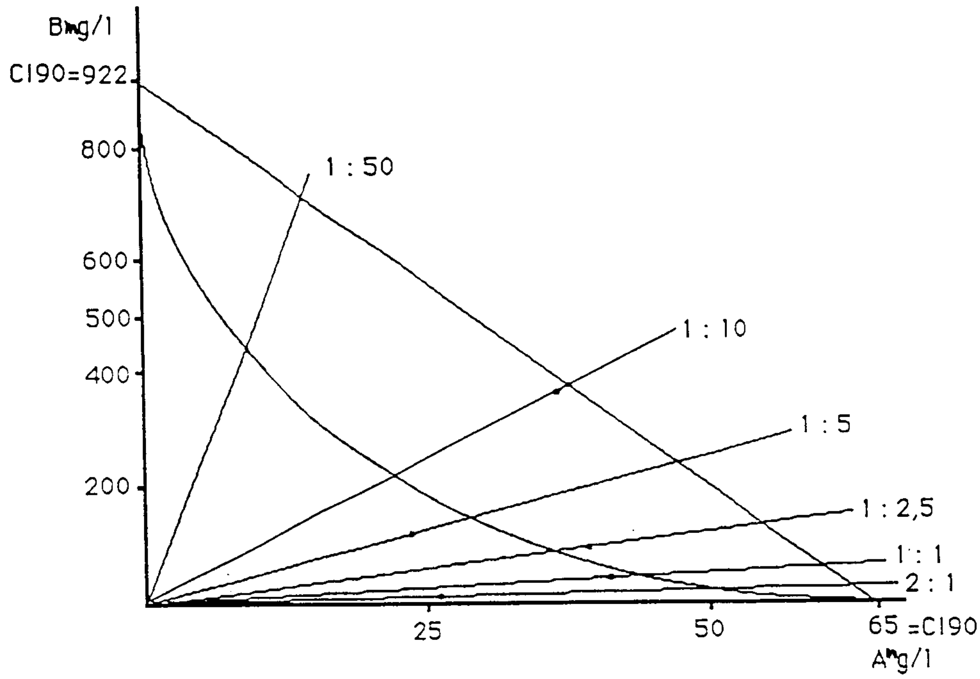
Bmg/l
C190=922
800
600
500
400
200
1 : 50
1 : 10
1 : 5
1 : 2,5
1 : 1
2 : 1
25
50
65 =C190
Amg/l

Fig.1

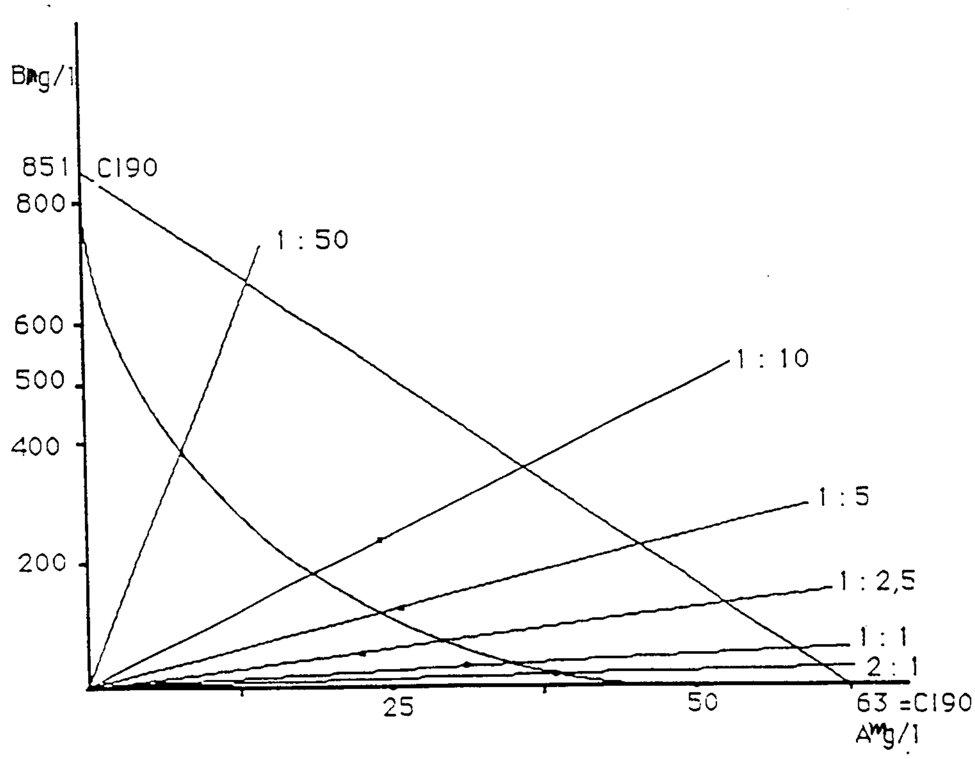
Bmg/l
851 C190
800
600
500
400
200
1 : 50
1 : 10
1 : 5
1 : 2,5
1 : 1
2 : 1
25
50
63 =C190
Amg/l

Fig.2

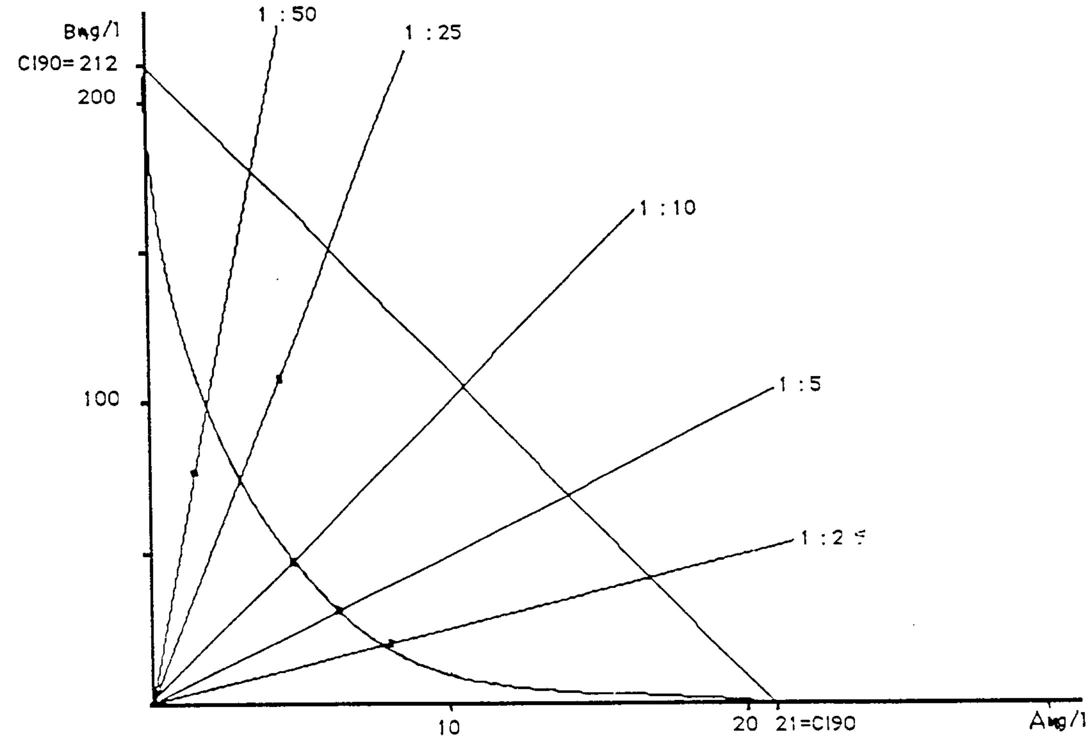


Fig. 3 :

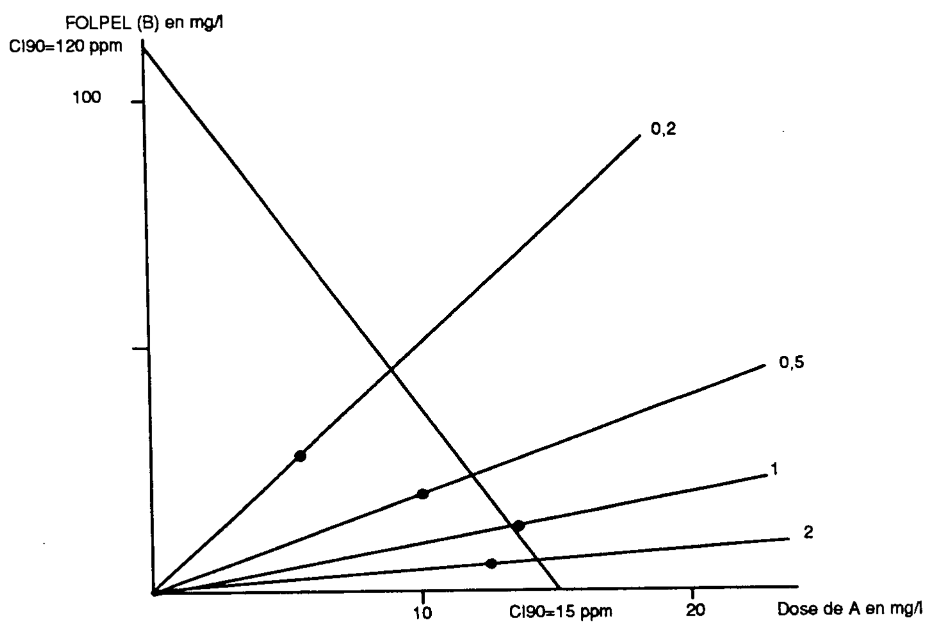
FOLPEL (B) en mg/l
CI90=120 ppm
100
0,2
0,5
1
2
10
CI90=15 ppm
20
Dose de A en mg/l

FIG.4

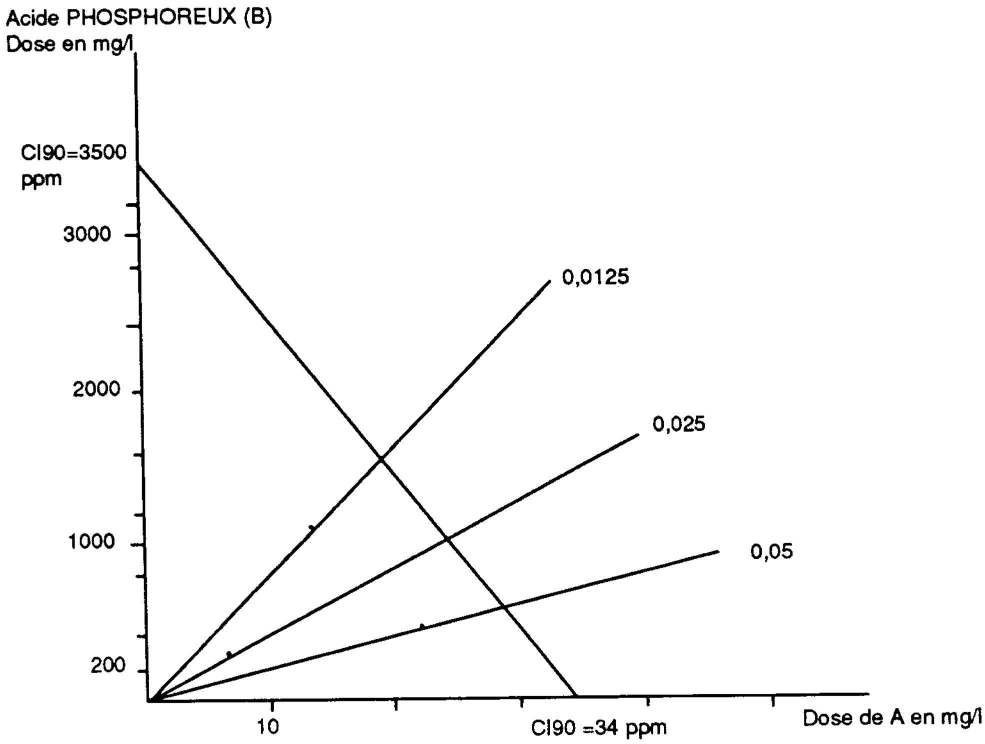
Acide PHOSPHOREUX (B)
Dose en mg/l
CI90=3500
ppm
3000
2000
1000
200
0,0125
0,025
0,05
10
CI90 =34 ppm
Dose de A en mg/l

FIG. 5

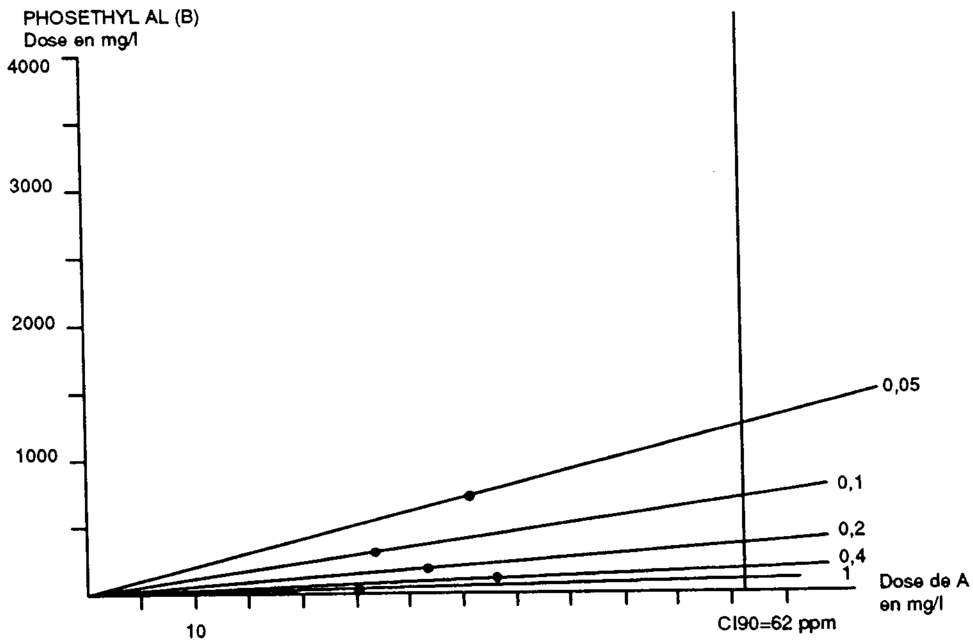
PHOSETHYL AL (B)
Dose en mg/l
4000
3000
2000
1000
0,05
0,1
0,2
0,4
1
Dose de A
en mg/l
10
CI90=62 ppm

**FIG. 6**

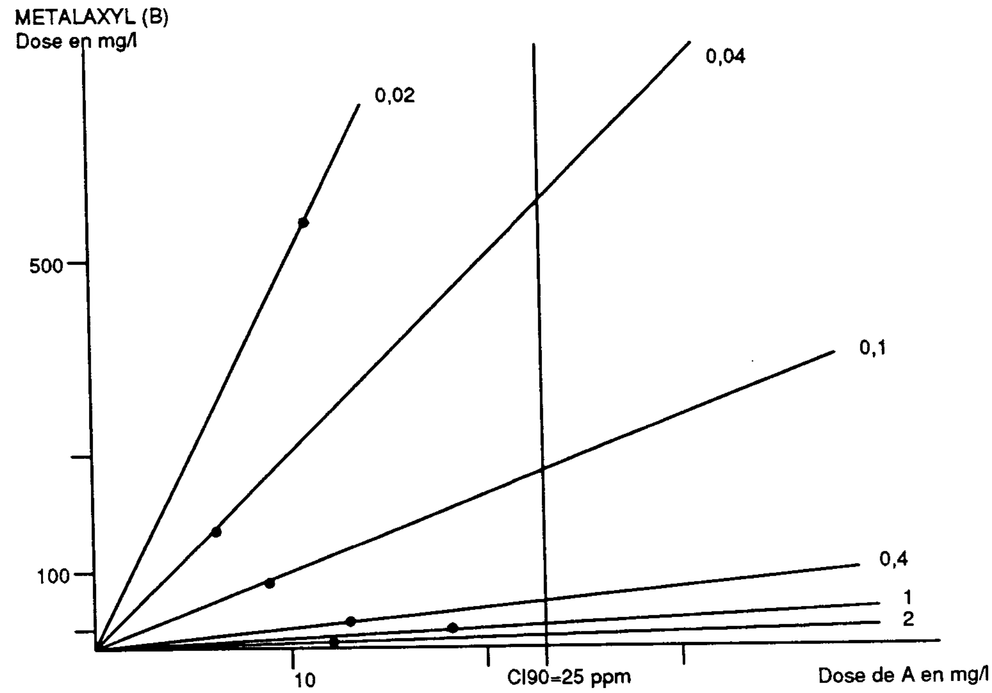
METALAXYL (B)
Dose en mg/l
0,02
0,04
500
0,1
100
0,4
1
2
10
CI90=25 ppm
Dose de A en mg/l

FIG.7

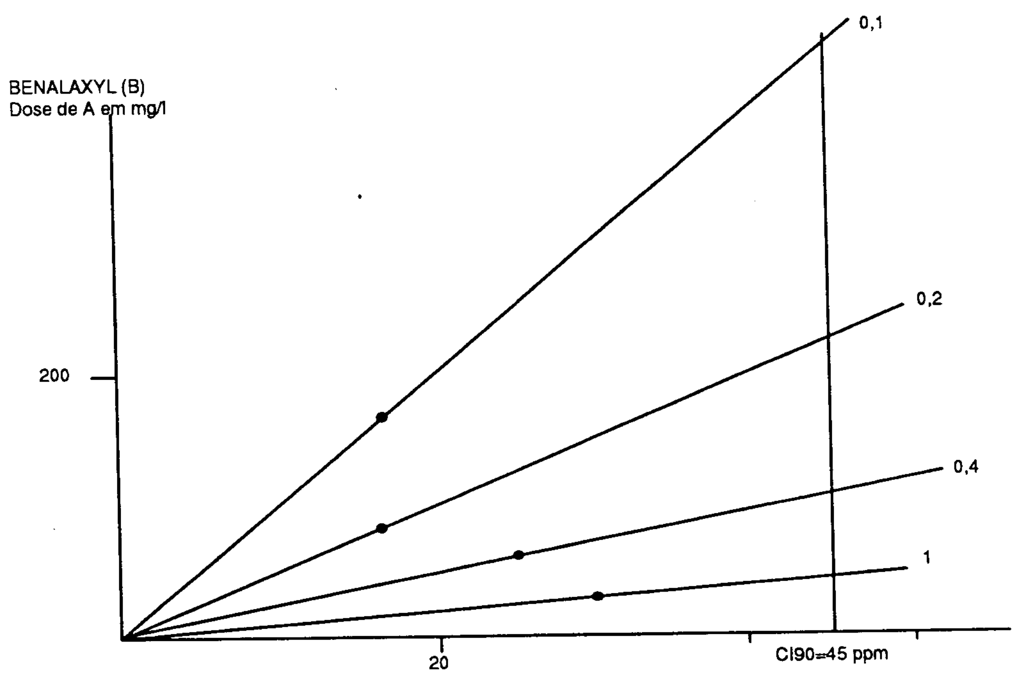
0,1
BENALAXYL (B)
Dose de A em mg/l
0,2
200
0,4
1
20
CI90=45 ppm

FIG.8

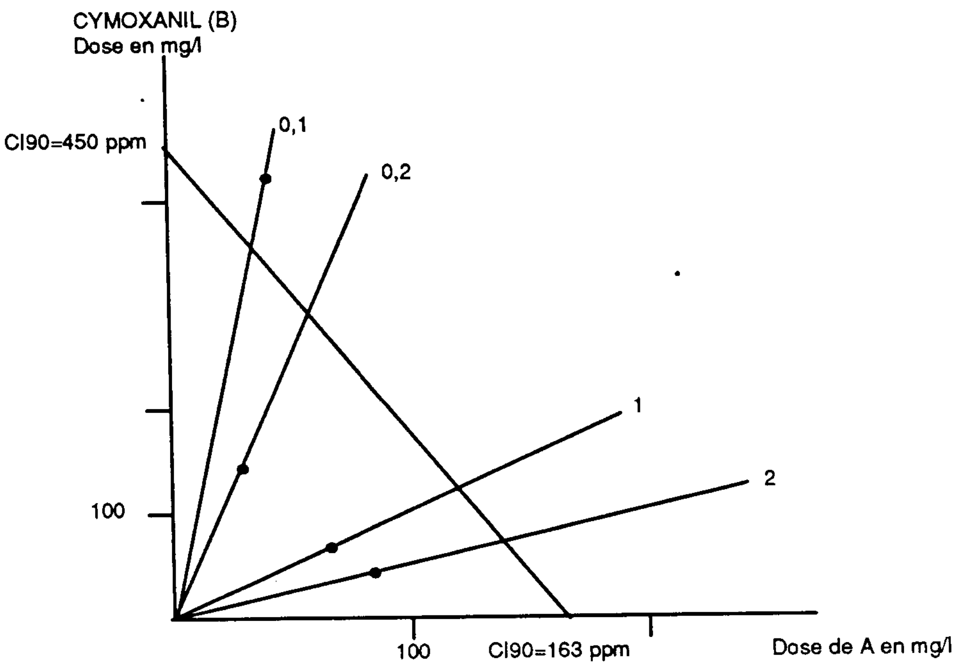
CYMOXANIL (B)
Dose en mg/l
CI90=450 ppm
0,1
0,2
1
2
100
100
CI90=163 ppm
Dose de A en mg/l

FIG.9

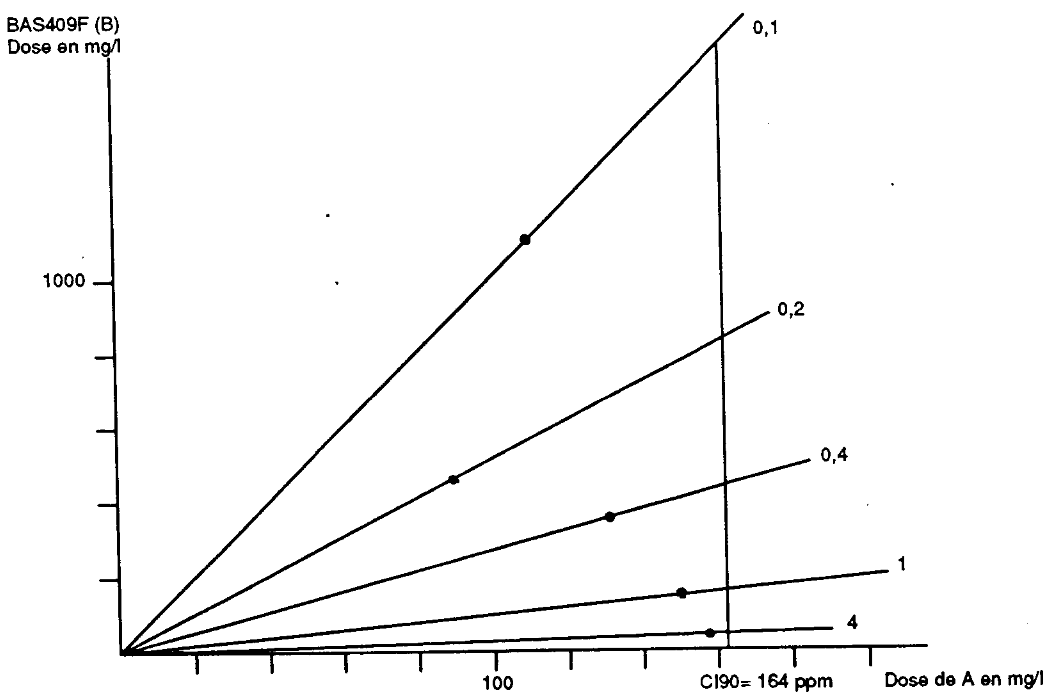
BAS409F (B)
Dose en mg/l
0,1
1000
0,2
0,4
1
4
100
CI90= 164 ppm
Dose de A en mg/l

FIG. 10

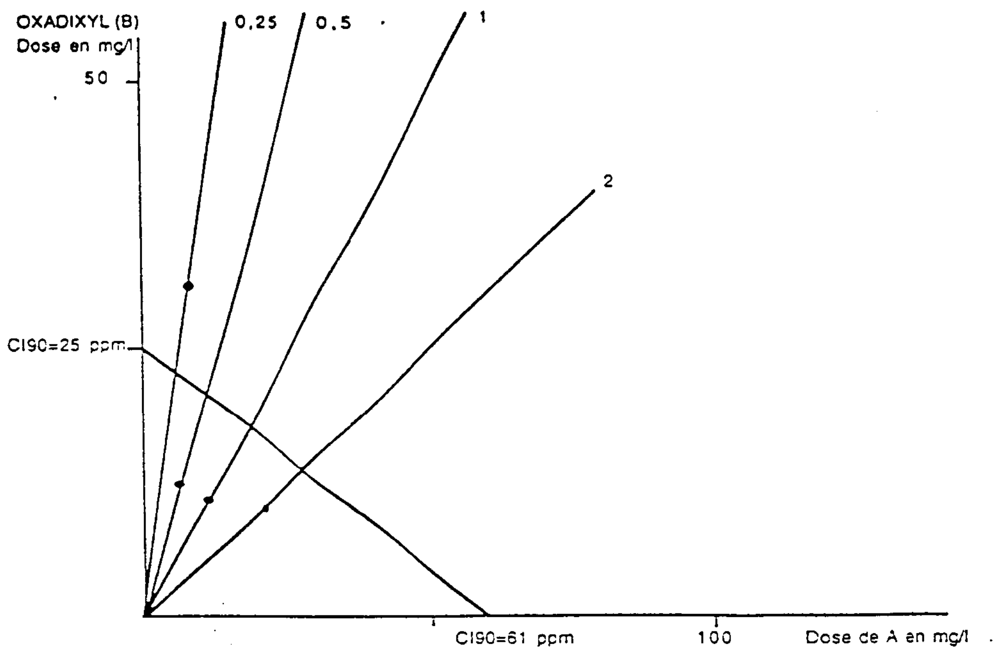
OXADIXYL (B)
Dose en mg/l
50
0,25
0,5
1
2
CI90=25 ppm
CI90=61 ppm
100
Dose de A en mg/l

FIG.11

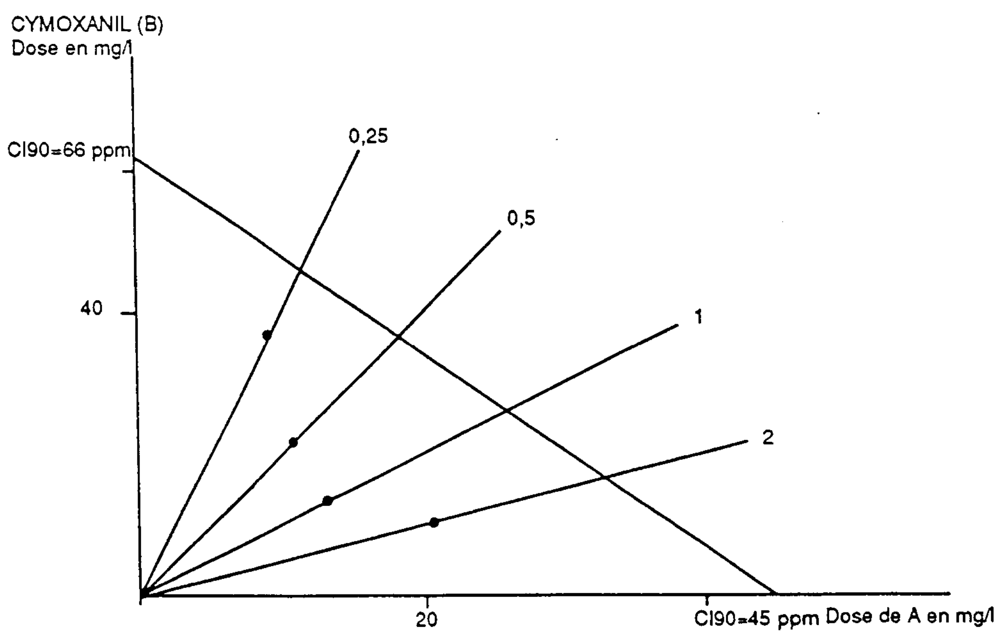
CYMOXANIL (B)
Dose en mg/l
CI90=66 ppm
40
0,25
0,5
1
2
20
CI90=45 ppm
Dose de A en mg/l

FIG.12

Office européen des brevets

# RAPPORT DE RECHERCHE EUROPEENNE

Numero de la demande
EP 94 42 0271

## DOCUMENTS CONSIDERES COMME PERTINENTS

| Catégorie | Citation du document avec indication, en cas de besoin, des parties pertinentes | Revendication concernée | CLASSEMENT DE LA DEMANDE |
| --- | --- | --- | --- |
| A,P | EP-A-0 578 586 (RHONE-POULENC AGROCHEMIE)<br>* page 1, ligne 1 - ligne 29 *<br>* page 11, ligne 41 - ligne 46 *<br>--- | 1-24 | A01N37/38 |
| A,D | EP-A-0 360 701 (RHONE-POULENC AGROCHIMIE)<br>----- | | |

DOMAINES TECHNIQUES RECHERCHES (Int.Cl.6)

A01N

Le présent rapport a été établi pour toutes les revendications

| Lieu de la recherche | Date d'achèvement de la recherche | Examinateur |
| --- | --- | --- |
| LA HAYE | 16 Janvier 1995 | Decorte, D |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)